# EUROPÄISCHE PATENTSCHRIFT

(11) **EP 1 086 643 B1**
(45) Veröffentlichungstag und Bekanntmachung des Hinweises auf die Patenterteilung: **06.11.2002**
(21) Anmeldenummer: 00120837.0
(22) Anmeldetag: 25.09.2000
(51) Int. Cl.: A47J 43/12, A23P 1/16

(54) **Vorrichtung zur Herstellung aufgeschlagener, schaumartiger Massen, wie z.B. Schlagsahne**
Device for producing whipped, foam-like products, e.g. whipped cream
Dispositif pour produire des masses fouettées ou mousseuses, comme par exemple la crème fouettée

(30) Priorität: 27.09.1999 DE 29916914 U; 27.09.1999 DE 29916922 U
(43) Veröffentlichungstag der Anmeldung: 28.03.2001
(73) Patentinhaber: Kümmerling, Josef, D-77815 Bühl (DE)
(72) Erfinder: Meier,Helmut, 77815 Bühl (DE)
(74) Vertreter: Zipse + Habersack

(56) Entgegenhaltungen:
- EP-A- 0 483 644
- EP-A- 0 583 506
- US-A- 3 758 080

## Beschreibung

Die Erfindung betrifft eine Vorrichtung zur Herstellung aufgeschlagener, schaumartiger Massen, wie z. B. Schlagsahne, bestehend aus einem mit einer Kühleinrichtung versehenen, isolierten Gehäuse, in dessen Innenraum die flüssige Masse, insbesondere die Sahne, in einem gekühlten Behälter angeordnet ist, wobei im Innenraum eine Förderpumpe für die Sahne und zugeführte Luft angeordnet ist, die einem Mischpunkt und anschließend einem isolierten Sahneaufschlagsystem zugeführt werden, das in einen Ausgangsteil mit Garniertülle mündet.

Die vorbekannten Vorrichtungen dieser Art weisen jedoch den Nachteil auf, daß bei längeren Standzeiten eine erhöhte Bakterienvermehrung stattfindet, die unter anderem darauf zurückzuführen ist, daß das Sahneaufschlagsystem nicht bis zum externsten Punkt im Ausgangsteil mit der Garniertülle ausreichend gekühlt wird.

Außerdem weisen die bekannten Vorrichtungen noch den Nachteil auf, daß vor allem bei längeren Standzeiten eine starke Bakterienvermehrung stattfindet, die unter anderem darauf zurückzuführen ist, daß die dem Mischpunkt von Sahne und Luft zugeführte Luft eine erhöhte Temperatur aufweist.

In der EP 0 583 506 B1 ist eine Vorrichtung zum Herstellen von gekühlter Sahne beschrieben, die einen ähnlichen Aufbau aufweist und die dadurch gekennzeichnet ist, daß eine Kühleinrichtung für die Schlageinrichtung und zum Kühlen des Ausgangsstückes und des Mundstückes mit der Gamiertülle vorgesehen ist. Die Kühleinrichtung besteht dabei aus einem wärmeleitenden Mantelstück, welches das Ausgangsstück umgibt, wobei das Mantelstück längs einer zylindrischen Ringfläche an einem Kälteleitrohr anliegt, das zusammen mit der für die Schlageinrichtung bestimmten Kühleinrichtung vorgesehen ist.

Bei der vorbekannten Vorrichtung wird also die Kälte über die Wärmeleitung von Festkörpern, beispielsweise Metallen, bewirkt, wobei zusätzliche Kühlschlangen erforderlich sind, die die Schlageinrichtung umgeben.

In der EP 0 483 644 A1 ist eine Vorrichtung zur gleichzeitigen Erzeugung und Abgabe von Schlagsahne oder dergleichen beschrieben(vgl. oberbegriff des Anspruchs 1), die aus den üblichen Einrichtungen, wie gekühltem Sahnebehälter, Motor zur Beförderung der Sahne, Kühleinrichtungen, einer Sahne-Emulgiereinrichtung, besteht. Das Ziel dieser Erfindung soll darin bestehen, ohne kälteerzeugende Kühlaggregate eine gleichmäßige und lang andauernde Kühlung der flüssigen und der aufgeschlagenen Flüssigkeit sowie der mit ihr in Berührung kommenden Bauteile auf wenige Grad C über dem Gefrierpunkt liegende Temperaturen zu erhalten. Zur Lösung dieser Aufgabe soll das Kühlmittel aus leicht und schnell aus der Aufnahmewanne herausnehmbaren, tiefgekühlten Kühlelementen bestehen, damit die Sahne nur auf eine noch über der Gefriertemperatur liegende, geringe Temperatur abgekühlt wird. Bei dieser Vorrichtung wird die Kühleinrichtung nur ganz allgemein angesprochen.

Es sind aber keine zusätzlichen Vorkehrungen getroffen, um das Bakterienproblem zu lösen. Durch das Vorsehen mehrerer Kühlelemente ist nicht gewährleistet, daß ganz bestimmte kritische Stellen in der Vorrichtung zusätzlich auf den erforderlichen niedrigen Temperaturen gehalten werden, um zu vermeiden, daß eine Bakterienvermehrung auftritt.

Der vorliegenden Erfindung liegt die Aufgabe zugrunde, eine Vorrichtung der eingangs genannten Art zu schaffen, die dazu beiträgt, daß die Bakterienvermehrung während der Handhabung der Vorrichtung auch bei längeren Stillstandszeiten wesentlich herabgesetzt wird.

Zur Lösung der gestellten Aufgabe wird eine Vorrichtung der eingangs genannten Art vorgeschlagen, welche dadurch gekennzeichnet ist, daß die kalte Luft im Ansaugbereich vor dem Sahneaufschlagsystem durch Kühlschlangen zusätzlich auf +2° C bis +5° C gekühlt wird und vom Innenraum des Gehäuses (1) über einen das Sahneaufschlagsystem umgebenden Luftkanal, der bis zum externsten Punkt des Sahneaufschlagsystems und des Ausgangsteils mit der Garniertülle reicht, gesaugt oder geblasen wird und über mindestens einen Luftkanal in den Innenraum des Gehäuses oder des in der Vorrichtung befindlichen Kühlsystems zurückgeführt wird.

Die Vorrichtung gemäß der Erfindung weist gegenüber der vorbekannten Vorrichtung den wesentlichen Vorteil auf, daß die in der Vorrichtung, d. h. im Gehäuse, vorhandene kühle Luft zur Kühlung des Aufschlagsystems und des Ausgangsteils mit der Garniertülle verwendet wird, wobei durch die Bewegung der gekühlten Luft durch die entsprechenden Kanäle eine bessere und sehr schnelle Abkühlung auch der äußersten Teile des Ausgangsteils bewirkt wird. Damit wird auch erreicht, daß die Bakterienvermehrung durch die Abkühlung der genannten Teile auf +2° C bis +5° C wesentlich vermindert wird.

Gemäß einer besonderen Ausführungsform ist bei der Vorrichtung gemäß der Erfindung der Luftkanal, der das Sahneaufschlagsystem und den Ausgangsteil umgibt, zylinderförmig ausgebildet und mündet am Ende in mindestens einen Rückführungskanal, an dessen Ende im Inneren des Gehäuses ein Sauggebläse angeordnet ist.

Gemäß einer weiteren besonderen Ausführungsform ist bei der Vorrichtung gemäß der Erfindung ein besonderer, kanalisierter Lufteintritt vorgesehen, der für die über die Kühleinrichtung der Vorrichtung oder einer besonderen Kühleinrichtung auf eine Temperatur von höchstens +5° C oder kälter gekühlte Luft mindestens 5 mm oder mehr unterhalb des höchsten Fließpunktes der Sahne im Inneren des Gehäuses liegt.

Durch diese Maßnahme wird erreicht, daß bei Zufuhr der abgekühlten Luft das mikrobielle Wachstum so gehemmt ist, daß die nachfolgend aufgeschlagene Sahne eine geringstmögliche Bakterienzahl aufweist.

Eine weitere Ausführüngsform besteht darin, daß zwischen dem kanalisierten Lufteintritt und dem Mischpunkt von Luft und Sahne ein bakterienundurchlässiges Filter, z. B. ein Aktivkohlefilter, angeordnet ist.

Anhand der Zeichnungen soll am Beispiel bevorzugter Ausführungsformen die Vorrichtung gemäß der Erfindung näher erläutert werden.

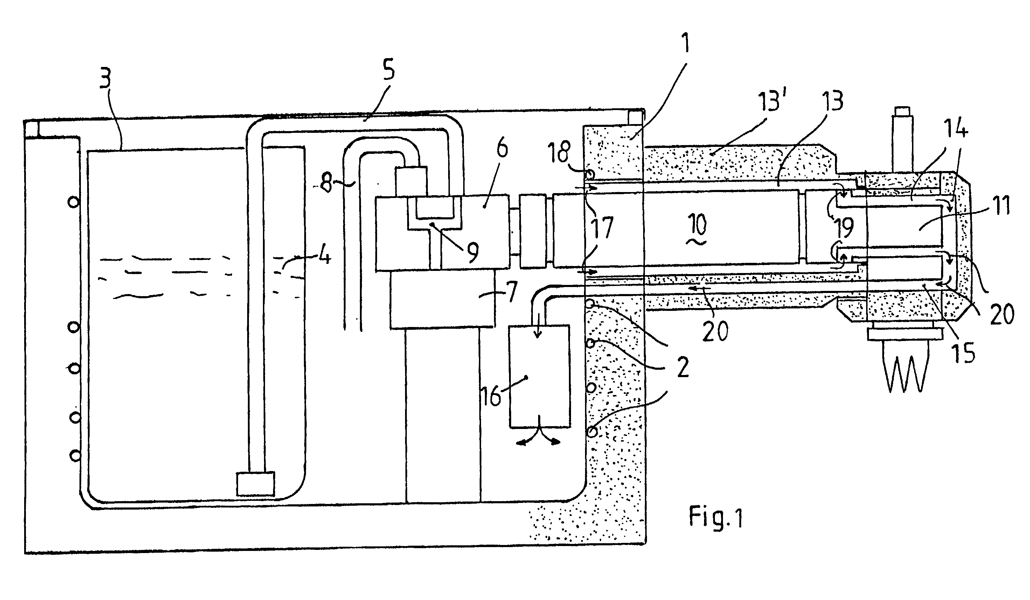

In der Zeichnung zeigt
- **Fig. 1**: einen prinzipiellen Schnitt durch eine Ausführungsform der Vorrichtung gemäß der Erfindung.

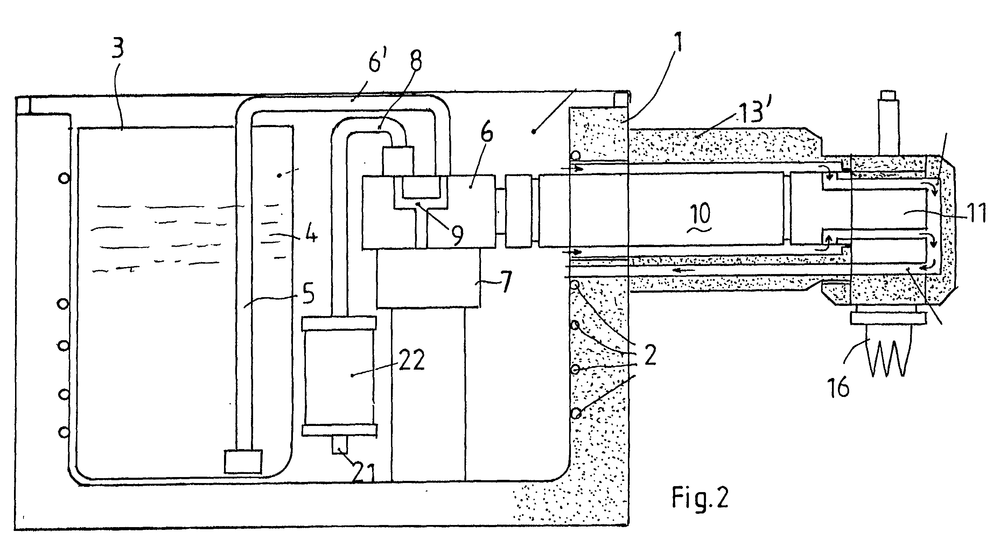

- **Fig. 2**: zeigt ebenfalls einen Schnitt durch eine abgewandelte Ausführungsform der Vorrichtung gemäß der Erfindung.

Die Vorrichtung besteht im wesentlichen aus einem isolierten Gehäuse 1, an dessen Innenwand Kühlschlangen 2 angeordnet sind. Im Gehäuse 1 befindet sich ein Behälter 3, der mit flüssiger Sahne 4 gefüllt ist. In diesen Behälter ragt ein Rohr 5, das mit einer Förderpumpe 6 in Verbindung steht, die von einem beliebigen Motor 7 angetrieben wird. Die Luftzufuhr erfolgt über das Rohr 8. Die Mischung der Sahne mit der Luft erfolgt am Mischpunkt 9. Die gemischte Sahne wird einem Sahneaufschlagsystem 10 zugeführt und gelangt schließlich in den Ausgangsteil 11 mit der Garniertülle 12. Das Sahneaufschlagsystem 10 wird von einem mit einer Isolierung 13' versehenen, zylinderförmigen Hohlraum 13 umgeben, der in einen weiteren Hohlraum 14 im Ausgangsteil 11 mündet. Der Hohlraum 14 ist an mindestens einen Rückführkanal 15 angeschlossen, der zurück in das Gehäuse 1 führt und am Ende mit einer Gebläseeinrichtung 16 verbunden ist.

## Patentansprüche

1. Vorrichtung zur Herstellung aufgeschlagener, schaumartiger Massen, wie z. B. Schlagsahne, bestehend aus einem mit einer Kühleinrichtung versehenen, isolierten Gehäuse (1), in dessen Innenraum die flüssige Masse, insbesondere die Sahne, in einem gekühlten Behälter (3) angeordnet ist, wobei im Innenraum eine Förderpumpe (6) für die Sahne und zugeführte Luft angeordnet ist, die einem Mischpunkt (9) und anschließend einem isolierten Sahneaufschlagsystem (10) zugeführt werden, das in einen Ausgangsteil (11) mit Gamiertülle (12) mündet, ***dadurch gekennzeichnet,* daß** die kalte Luft im Ansaugbereich vor dem Sahneaufschlagsystem (10) durch Kühlschlangen (18) zusätzlich auf +2° C bis +5° C gekühlt wird und vom Innenraum des Gehäuses (1) über einen das Sahneaufschlagsystem (10) umgebenden Luftkanal (13), der bis zum externsten Punkt des Sahneaufschlagsystems und des Ausgangsteils (11) mit der Garniertülle (12) reicht, gesaugt oder geblasen wird und über mindestens einen Luftkanal (15) in den Innenraum des Gehäuses (1) oder des in der Vorrichtung befindlichen Kühlsystems zurückgeführt wird.

2. Vorrichtung nach Anspruch 1, ***dadurch gekennzeichnet,* daß** der Luftkanal (13) das Sahneaufschlagsystem und den Ausgangsteil (11) zylinderförmig umgibt und in mindestens einen Rückführkanal (15) mündet, an dessen Ende im Innenraum des Behälters ein Sauggebläse (16), eine Pumpe, eine Turbine od. dgl. angeordnet ist.

3. Vorrichtung nach Anspruch 1, ***dadurch gekennzeichnet,* daß** ein kanalisierter Lufteintritt (21) vorgesehen ist, der für die über die Kühleinrichtung der Vorrichtung oder eine besondere Kühleinrichtung auf eine Temperatur von höchstens +5° C oder kälter gekühlte Luft mindestens 5 mm oder mehr unterhalb des höchsten Fließpunktes (6') der Sahne (4) im Inneren des Gehäuses (1) liegt.

4. Vorrichtung nach Anspruch 3, ***dadurch gekennzeichnet,* daß** zwischen kanalisiertem Lufteintritt und dem Mischpunkt von Luft und Sahne ein bakterienundurchlässiges Filter, z. B. ein Aktivkohlefilter, zwischengeschaltet ist.

## Claims

1. A device for producing whipped, foam-like products, e.g. whipped cream, consisting of an insulated housing (1), provided with a cooling device, in the interior of which housing the liquid mass, particularly the cream, is arranged in a cooled container (3), a feed pump (6) being arranged In the Interior for the cream and air supplied, which are fed to a mixing point (9), and then to an insulated cream whipping system (10) which opens into an output section (11) with a trimming bush (12), ***characterised in that*** the cold air is additionally cooled in the suction area before the cream whipping system (10) by cooling hoses (18) to +2°C to +5°C, is sucked or blown from the inside of the housing (1) through an air duct (13) surrounding the cream whipping system (10), which duct extends as far as the outermost point of the cream whipping system and the output section (11) with the trimming bush (12), and is returned through at least one air duct (15) to the interior of the housing (1) or the cooling system existing in the device.

2. A device according to Claim 1, ***characterised in that*** the air duct (13) surrounds the cream whipping system and output section (11) in the shape of a cylinder, and opens into at least one return duct (15) at whose end, inside the container, is arranged a suction fan (16), a pump, a turbine or the like.

3. A device according to Claim 1, ***characterised in that*** a ducted air inlet (21) is provided which is located at least 5 mm or more underneath the highest point of flow (6') of the cream (4) inside the housing (1) for the air cooled by the cooling system of the device or by a special cooling device to a maximum temperature of +5°C or colder.

4. A device according to Claim 3, ***characterised in that*** a filter impermeable to bacteria, e.g. an activated carbon filter, is inserted between the ducted air inlet and the mixing point of air and cream.

## Revendications

1. Dispositif pour produire des masses fouettées du type mousse, par exemple de la crème fouettée, comprenant un boîtier isolé (1) muni d'un système de réfrigération et dans l'espace intérieur duquel la masse liquide, en particulier la crème, est logée dans un récipient réfrigéré (3), ledit espace intérieur renfermant une pompe (6) de refoulement de la crème et d'air admis qui sont délivrés à un point de mélange (9), puis à un système isolé (10) de battage de la crème, débouchant dans une partie de sortie (11) dotée d'une douille de garnissage (12), **caractérisé par le fait que** l'air froid est additionnellement refroidi pour passer à +2°C à + 5°C en empruntant des serpentins de réfrigération (18), dans la zone d'aspiration précédant le système (10) de battage de la crème, et est aspiré ou insufflé depuis l'espace intérieur du boîtier (1), par l'intermédiaire d'un canal (13) à air qui entoure le système (10) de battage de la crème et qui s'étend jusqu'au point le plus externe dudit système de battage de la crème, et de la partie de sortie (11) dotée de la douille de garnissage (12), puis est réintroduit, par l'intermédiaire d'au moins un canal (15) à air, dans l'espace intérieur du boîtier (1) ou du système de réfrigération situé dans le dispositif.

2. Dispositif selon la revendication 1, **caractérisé par le fait que** le canal (13) à air entoure cylindriquement le système de battage de la crème et la partie de sortie (11), et débouche dans au moins un canal de réintroduction (15) à l'extrémité duquel une soufflerie d'aspiraticn (16), une pompe, une turbine ou un élément similaire se trouve dans l'espace intérieur du récipient.

3. Dispositif selon la revendication 1, **caractérisé par** la présence d'une entrée d'air (21) canalisée destinée à l'air refroidi jusqu'à une température de +5°C au maximum, voire inférieure, par l'intermédiaire du système de réfrigération du dispositif, ou d'un système de réfrigération particulier, et située au minimum à 5 mm, voire plus, au-dessous du point de circulation (6') de la crème (4) qui occupe la position la plus haute à l'intérieur du boîtier (1).

4. Dispositif selon la revendication 3, **caractérisé par le fait qu'**un filtre imperméable aux bactéries, par exemple un filtre à charbons actifs, est interposé entre l'entrée d'air canalisée, et le point de mélange de l'air et de la crème.
